# FASCICULE DE BREVET EUROPEEN

(11) **EP 1 392 534 B1**
(45) Date de publication et mention de la délivrance du brevet: **06.12.2006**
(21) Numéro de dépôt: 02733149.5
(22) Date de dépôt: 06.06.2002
(51) Int. Cl.: B60H 1/00

(54) **DISPOSITIF DE COMMANDE DE L'ANGLE D'OUVERTURE DES CLAPETS D'AERATION DE L'EQUIPEMENT DE VENTILATION/CLIMATISATION D'UN VEHICULE**
BETÄTIGUNGSVORRICHTUNG DES ÖFFNUNGSWINKELS DER LÜFTUNGSKLAPPEN VON EINER FAHRZEUGBELÜFTUNGS/- KLIMAGRUPPE
DEVICE FOR CONTROLLING THE OPENING ANGLE OF THE VENTILATION FLAPS OF A MOTOR VEHICLE VENTILATION/AIR CONDITIONING EQUIPMENT

(30) Priorité: 06.06.2001 DE 10127347
(43) Date de publication de la demande: 03.03.2004
(73) Titulaire: Valeo Klimasysteme GmbH, 96476 Rodach (DE)
(72) Inventeur: FIENE, Andreas, 38179 Grosse Schwülper (DE)
(74) Mandataire: Lemaire, Marc
(86) Numéro de dépôt international: PCT/IB2002/002089
(87) Numéro de publication internationale: WO 2002/098689

(56) Documents cités:
- EP-A- 0 337 382
- DE-A- 19 643 233
- DE-A- 19 648 813
- FR-A- 2 778 150
- FR-A- 2 806 041

## Description

La présente demande se rapporte à un dispositif de commande de l'angle d'ouverture des clapets d'aération de l'équipement de ventilation/climatisation d'un véhicule tel qu'il est décrit par le préambule de la revendication indépendante 1 et divulgué dans DE 19648913.

Les équipements de ventilation ou de climatisation et/ou de l'équipement de chauffage de l'habitacle des véhicules comprennent généralement un boîtier dans lequel est disposée une pluralité de conduits de ventilation. Pour commander la ventilation de l'habitacle du véhicule, ces conduits de ventilation peuvent ici généralement être ouverts ou fermés à l'aide de clapets d'aération.

Dans ce contexte, un équipement de ventilation est connu, par exemple, du document EP 0 337 382, avec lequel les clapets d'aération sont reliés à des leviers de clapet correspondants qui sont actionnés par une roue à came de distribution fixée à une paroi de l'équipement de ventilation du véhicule.

Une roue à came correspondante est également connue du document FR 0003048.

Malgré les avantages incontestables qui résultent des dispositifs d'après les indications des documents mentionnés précédemment, il existe cependant toujours un besoin important d'amélioration et de perfectionnement, notamment pour réduire la complexité qui est actuellement nécessaire en combinaison avec la commande de tous les clapets d'aération de l'équipement de ventilation d'un véhicule.

Par conséquent, l'objet de la présente invention est de prévoir un dispositif de commande des clapets d'aération de l'équipement de ventilation/climatisation et/ou de l'équipement de chauffage d'un véhicule qui permet de manière relativement simple une commande de la position d'ouverture de tous les clapets d'aération de l'équipement de ventilation du véhicule, qui est facile et peu coûteux à fabriquer et qui se monte facilement.

Cet objet est réalisé par les caractéristiques de la revendication indépendante 1, des formes de réalisation judicieuses étant décrites par les caractéristiques des revendications secondaires.

De manière préférentielle, il est à chaque fois prévu au moins un chemin de came sur la surface extérieure périphérique de chaque élément de commande, dans lequel circule à chaque fois au moins un levier de clapet qui amène le clapet d'aération qui lui est associé dans une position d'ouverture ouverte, fermée ou intermédiaire indépendamment de la position de l'élément de commande correspondant.

Les surfaces périphériques du cylindre de commande peuvent ici présenter un angle l'une par rapport à l'autre, c'est-à-dire ne pas être parallèles si l'arrangement cinématique correspondant destiné à commander les clapets d'aération l'impose.

Plus précisément, le cylindre de commande peut présenter des surfaces coniques périphériques dans lesquelles peuvent également être usinés des chemins de came.

En prévoyant le dispositif de commande des clapets d'aération de l'équipement de ventilation/climatisation et/ou de l'équipement de chauffage d'un véhicule, comme décrit précédemment, il est possible de commander la position d'ouverture de tous les clapets d'aération de l'équipement de ventilation d'un véhicule en modifiant la position d'un seul organe de commande.

Il est en outre prévu un arrangement des clapets d'aération de l'équipement de ventilation/climatisation et/ou de l'équipement de chauffage d'un véhicule, lequel est commandé par un dispositif comme décrit plus haut et qui se caractérise en ce que l'arrangement des clapets d'aération présente à la fois des paires de clapets d'aération symétriques entre eux et des paires de clapets d'aération non symétriques entre eux.

Cet arrangement des clapets d'aération peut ici être réalisé de telle manière qu'au moins deux clapets symétriques soient prévus pour l'espace des pieds, dont la position d'ouverture est à chaque fois déterminée par l'angle de rotation des cylindres de commande, l'angle de rotation des cylindres de commande étant transmis aux clapets de l'espace des pieds par le levier de clapet correspondant guidé dans les chemins de came, lesquels sont reliés aux clapets de l'espace des pieds.

L'arrangement des clapets d'aération peut également être réalisé de manière à prévoir au moins deux clapets symétriques de diffuseur personnel dont la position d'ouverture est déterminée par l'angle de rotation de l'un des cylindres de commande, l'angle de rotation du cylindre de commande étant transmis aux clapets de diffuseur personnel par un levier de clapet correspondant guidé dans les chemins de came prévus en face avant du cylindre de commande, lesquels sont reliés aux clapets de diffuseur personnel par le biais d'un axe commun aux deux.

L'arrangement des clapets d'aération peut en outre être réalisé de manière à prévoir au moins deux clapets d'aération asymétriques qui sont couplés ensemble par une bielle et un levier coudé qui sont prévus sur les côtés opposés des clapets d'aération. Il est ici préférable que l'un des clapets d'aération asymétriques soit un clapet de diffuseur personnel qui est disposé sur le même axe que les autres clapets de diffuseur personnel et que l'autre clapet d'aération serve à aérer une autre zone du véhicule et soit monté sur un axe parallèle au premier axe.

D'autres propriétés et avantages de la présente invention résultent de la description suivante d'une forme de réalisation particulière en se référant aux dessins joints qui illustrent :
- Figure 1: une vue de dessus sur un mécanisme central ;
- Figure 2: une vue en coupe le long de la ligne A-A ;
- Figure 3: une vue en perspective des arrangements des figures 1 et 2 ;
- Figures 4-6: des vues correspondant aux figures 1 à 3 avec une position angulaire modifiée de l'organe de commande.

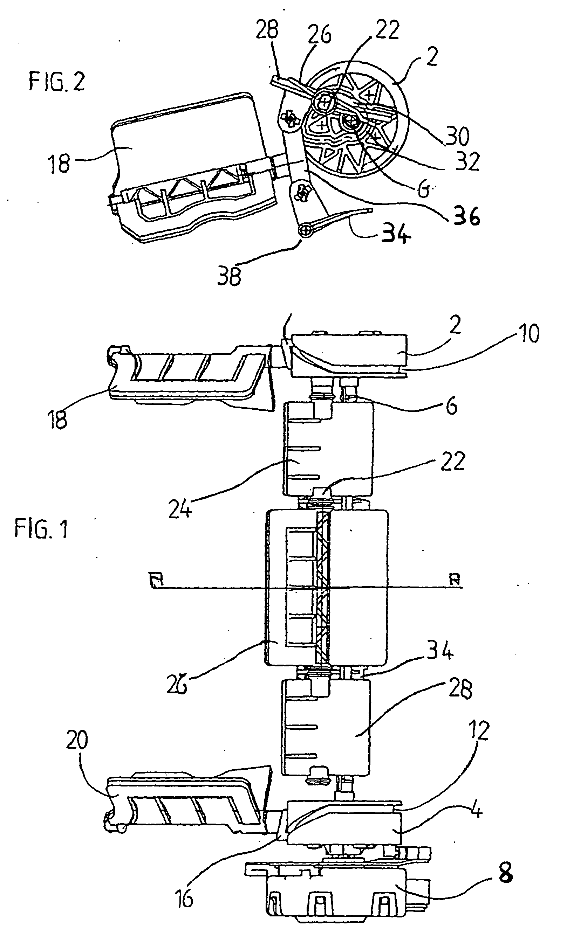

La figure 1 représente une vue de dessus d'un mécanisme central de l'équipement de ventilation/climatisation et/ou de l'équipement de chauffage d'un véhicule comprenant un organe de commande central mobile qui est constitué de deux cylindres de commande 2, 4 et d'un axe 6 qui les relie. L'organe de commande complet, composé des cylindres de commande 2, 4 et de l'axe 6, est mis en rotation par un servomoteur 8.

Comme le montre ensuite la figure 2, des chemins de came 10, 12 sont façonnés dans les surfaces périphériques des cylindres de commande 2, 4. Dans les chemins de came 10, 12 circulent des leviers de clapet 14, 16 qui, dans la forme de réalisation illustrée dans la figure 2, sont reliés à des clapets d'aération 18, 20 et amènent ces derniers dans une position d'ouverture correspondante en fonction de l'angle de rotation des cylindres de commande 2, 4. Dans la forme de réalisation représentée dans la figure 2, les clapets d'aération 18, 20 sont des clapets de l'espace des pieds qui ouvrent ou ferment les conduits d'arrivée d'air respectifs à l'intérieur d'un boîtier (non illustré) disposé en conséquence dans l'équipement de ventilation d'un véhicule.

Comme le montre également la figure 2, des clapets de diffuseur personnel 24, 26, 28 sont prévus sur un axe 22 séparé entre les cylindres de commande 2, 4. La position d'ouverture de ces clapets de diffuseur personnel 24, 26, 28 est déterminée par un levier de clapet 30 qui circule dans un chemin de came 32 prévu dans la face avant intérieure du cylindre de commande 2, comme le montre la figure 2 qui est une coupe le long de la ligne A-A de la figure 1.

La figure 2 représente en plus un clapet d'aération 34 destiné à la ventilation de la console centrale à l'arrière d'un véhicule et qui est relié par liaison directe à l'aide d'une tige de couplage 36 au clapet de diffuseur personnel 26. Le clapet d'aération 34 pivote ici autour de l'axe 38.

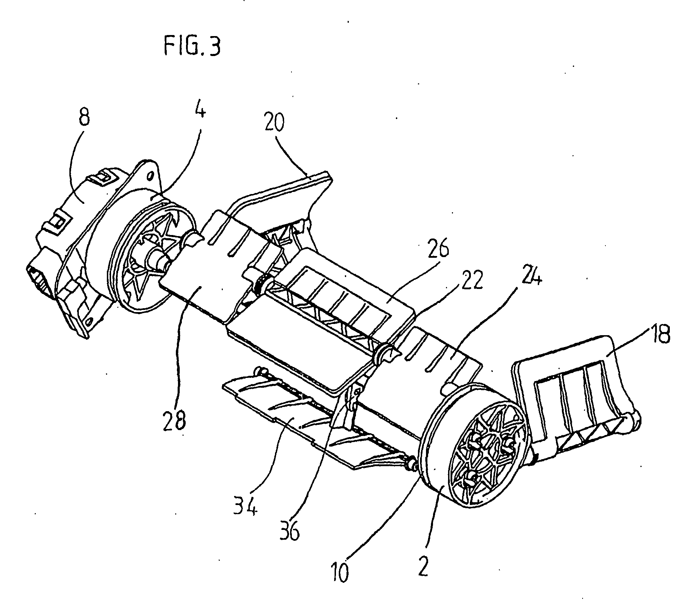

La figure 3 représente le mécanisme central des figures 1 et 2 dans une vue en perspective. Les éléments identiques sont ici identifiés par les caractères de référence correspondants.

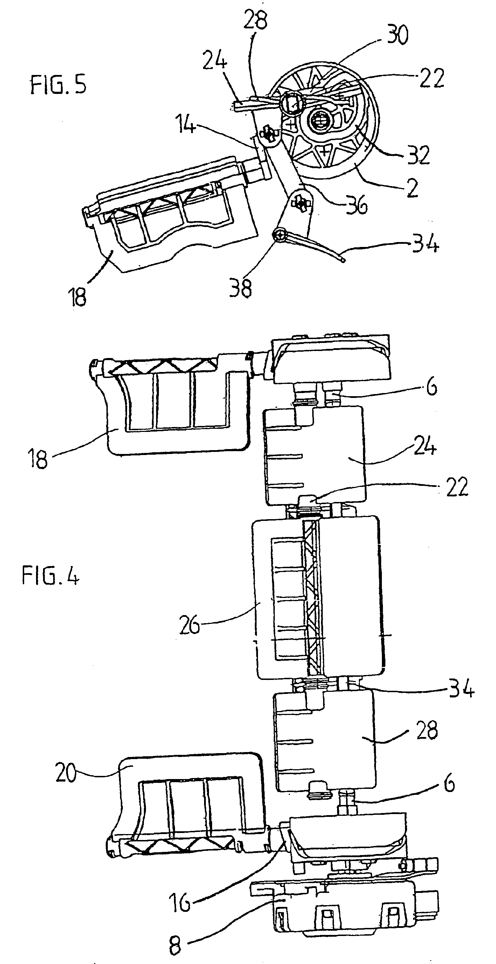

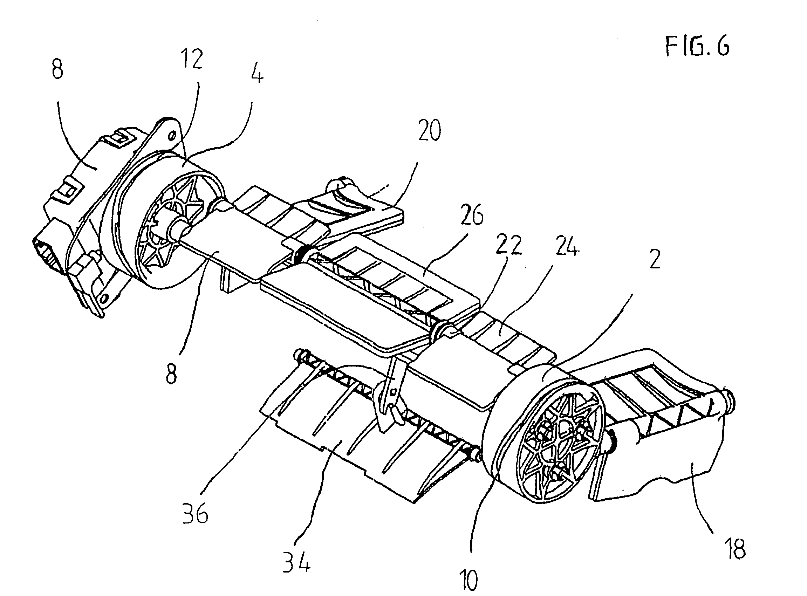

Les autres figures 4, 5 et 6 représentent des illustrations correspondant aux figures 1, 2 et 3. La différence par rapport aux figures 1, 2 et 3 réside cependant dans la position angulaire modifiée des cylindres de commande 2, 4, ce qui a pour conséquence que tous les autres éléments ou les clapets d'aération, axes, etc. prennent une position modifiée en conséquence.

Comme on peut ici le constater très facilement, tous les éléments sont exclusivement influencés par la position des cylindres de commande 2, 4, ce qui permet une influence exceptionnellement simple de l'angle d'ouverture des clapets d'aération respectifs.

L'arrangement et la logique de commande sont ici conçus de telle manière que les différents leviers de clapet se contournent et que les chemins de came respectifs ne se gênent pas.

## Revendications

1. Dispositif de commande des clapets d'aération (18, 20, 24, 26, 28, 34) de l'équipement de ventilation/climatisation et/ou de l'équipement de chauffage d'un véhicule, dans lequel est prévu un organe de commande central mobile dont la position détermine à tout moment l'état d'ouverture de tous les clapets d'aération, ledit organe de commande est un dispositif qui peut tourner autour d'un axe et se compose d'un axe de rotation (6) sur lequel sont fixés plusieurs éléments de commande (2, 4) séparés qui tournent avec l'axe **caractérisé en ce que** ces éléments de commande (2, 4) séparés sont des cylindres de commande qui sont fixés écartés l'un de l'autre sur l'axe de rotation (6).

2. Dispositif selon la revendication 1 **caractérisé en ce qu'**il est à chaque fois prévu au moins un chemin de came (10, 12) sur la surface extérieure périphérique de chaque élément de commande (2, 4), dans lequel circule à chaque fois au moins un levier de clapet (14, 16, 30) qui ouvre ou ferme le clapet d'aération qui lui est associé en fonction de la position de l'élément de commande (2, 4) correspondant.

3. Dispositif selon l'une des revendications 1 ou 2, **caractérisé en ce que** les cylindres de commande (2, 4) présentent plusieurs surfaces périphériques qui sont disposées en angle l'une par rapport à l'autre.

4. Dispositif selon la revendication 3, **caractérisé en ce que** des chemins de came sont usinés dans chacune des surfaces périphériques disposées en angle l'une par rapport à l'autre des cylindres de commande (2, 4).

5. Dispositif selon l'une des revendications précédentes, **caractérisé en ce qu'**un seul servomoteur (8) est prévu pour actionner l'ensemble du mécanisme.

6. Arrangement de clapets d'aération de l'équipement de ventilation/climatisation et/ou de l'équipement de chauffage d'un véhicule, lequel est commandé par un dispositif selon l'une des revendications 1 à 5, **caractérisé en ce que** l'arrangement des clapets d'aération présente à la fois des paires de clapets d'aération symétriques entre eux et des paires de clapets d'aération non symétriques entre eux.

7. Arrangement de clapets d'aération selon la revendication 6, **caractérisé en ce qu'**au moins deux clapets symétriques de l'espace des pieds (18, 20) sont prévus, dont la position d'ouverture est à chaque fois déterminée par l'angle de rotation des cylindres de commande (2, 4), l'angle de rotation des cylindres de commande (2, 4) étant transmis aux clapets de l'espace des pieds (18, 20) par le levier de clapet (14, 16) correspondant guidé dans les chemins de came (10, 12), lesquels sont reliés aux clapets de l'espace des pieds (18, 20).

8. Arrangement de clapets d'aération selon la revendication 6, **caractérisé en ce qu'**il est prévu au moins deux clapets symétriques de diffuseur personnel (24, 26) dont la position d'ouverture est déterminée par l'angle de rotation de l'un des cylindres de commande (2), l'angle de rotation du cylindre de commande (2) étant transmis aux clapets de diffuseur personnel (24, 26) par un levier de clapet (30) correspondant guidé dans les chemins de came (32) prévus en face avant du cylindre de commande (2), lesquels sont reliés aux clapets de diffuseur personnel (24, 26) par le biais d'un axe (22) commun aux deux.

9. Arrangement de clapets d'aération selon la revendication 6, **caractérisé en ce qu'**il est prévu au moins deux clapets d'aération asymétriques (26, 34) qui sont couplés ensemble par une bielle et un levier coudé qui sont prévus sur les côtés opposés des clapets d'aération.

10. Arrangement de clapets d'aération selon la revendication 9, **caractérisé en ce que** l'un des clapets d'aération asymétriques est un clapet de diffuseur personnel (26) qui est disposé sur le même axe (22) que les autres clapets de diffuseur personnel (24, 28) et que l'autre clapet d'aération (34) serve à aérer une autre zone du véhicule et soit monté sur un axe (38) parallèle au premier axe (22).

11. Arrangement de clapets d'aération selon l'une des revendications 6 à 10, **caractérisé en ce que** les axes (22, 38) des clapets de diffuseur personnel (24, 26, 28) sont disposés dans un ou plusieurs plans perpendiculairement au plan dans lequel sont disposés les axes des clapets de l'espace des pieds (18, 20).

## Claims

1. Ventilation valve (18, 20, 24, 26, 28, 34) control device for the ventilation/air conditioning equipment and/or heating equipment of a vehicle, wherein a central moving control part is provided whose position determines at all times the state of opening of all the ventilation valves, wherein said control part is a device that can rotate around an axis and is composed of a rotation spindle (6) onto which several separate control parts (2, 4) are attached which rotate with the spindle,
**characterised in that** these separate control parts (2, 4) are control cylinders that are fixed distant from one another on the rotation spindle (6).

2. Device of claim 1, **characterised in that** there is provided each time at least one cam track (10, 12) on the external peripheral surface of each control part (2, 4) in which moves each time at least one valve lever (14, 16, 30) that opens or closes the ventilation valve that is associated to it according to the position of the corresponding control part (2, 4).

3. Device of any of claims 1 or 2, **characterised in that** the control cylinders (2, 4) have several peripheral surfaces positioned at an angle to one another.

4. Device of claim 3, **characterised in that** the cam tracks are machined onto each of the peripheral surfaces positioned at an angle with respect to one another of the control cylinders (2, 4).

5. Device of any of the previous claims, **characterised in that** a single servomotor (8) is provided to actuate the entire mechanism.

6. Arrangement of ventilation valves for the ventilation/air conditioning equipment and/or heating equipment of a vehicle, which is controlled by a device of any of claims 1 to 5, **characterised in that** the arrangement of ventilation valves has both pairs of ventilation valves that are symmetrical to one another and pairs of ventilation valves that are not symmetrical to one another.

7. Arrangement of ventilation valves of claim 6, **characterised in that** at least two symmetrical valves are provided for the foot ventilation zone (18, 20), whose open position is both determined by the angle of rotation of the control cylinders (2, 4), wherein the angle of rotation of the control cylinders (2, 4) is transmitted to the foot ventilation zone valves (18, 20) by the corresponding valve lever (14, 16) guided in the cam tracks (10, 12), which are connected to the foot ventilation zone valves (18, 20).

8. Arrangement of ventilation valves of claim 6, **characterised in that** at least two symmetrical valves are provided for the personal diffuser zone (24, 26), whose open position is determined by the angle of rotation of one of the control cylinders (2), wherein the angle of rotation of the control cylinder (2) is transmitted to the personal diffuser zone valves (24, 26) by a corresponding valve lever (30) guided in the cam tracks (32) provided on the front face of the control cylinder (2), which are connected to the personal diffuser zone valves (24, 26) by means of a spindle (22) that is common to both.

9. Arrangement of ventilation valves of claim 6, **characterised in that** at least two non symmetrical valves (26, 34) are provided, which are coupled together by a connecting rod and a bent lever that are provided on the opposite sides of the ventilation valves.

10. Arrangement of ventilation valves of claim 9, **characterised in that** at least one of the non symmetrical valves is a personal diffuser valve (26) that is positioned on the same spindle (22) as the other personal diffuser valves (24, 28) and that the other ventilation valve (34) is used to ventilate another zone of the vehicle and is mounted on a spindle (38) parallel to the first axis (22).

11. Arrangement of ventilation valves of any of claims 6 to 10, **characterised in that** at least the spindles (22, 38) of the two personal diffuser valves (24, 26, 38) are positioned in one or more planes perpendicularly to the plane in which the foot ventilation zone valve spindles (18, 20) are positioned.

## Patentansprüche

1. Vorrichtung zur Steuerung von Lüftungsklappen (18, 20, 24, 26, 28, 34) der Lüftungs-/Klimaanlage und/oder der Heizungsanlage eines Kraftfahrzeugs, in dem ein bewegliches, zentrales Steuerungsorgan vorgesehen ist, dessen Position jederzeit den zustand der Öffnung sämtlicher Lüftungsklappen bestimmt, wobei das besagte Steuerungsorgan eine Vorrichtung ist, die sich um eine Achse drehen kann und aus einer Rotationsachse (6) besteht, auf der mehrere separate Steuerungselemente (2, 4) befestigt sind, die sich mit der Achse drehen, **dadurch gekennzeichnet, dass** es sich bei diesen separaten Steuerungselementen (2, 4) um Steuerwalzen handelt, die voneinander entfernt auf einer Rotationsachse (6) befestigt sind.

2. Vorrichtung gemäß Anspruch 1, **dadurch gekennzeichnet, dass** jedes Mal mindestens ein Nockenweg (10, 12) auf der äußeren Umfangsfläche jedes Steuerungselementes (2, 4) vorgesehen ist, in dem jedes Mal mindestens ein Klappenhebel (14, 16, 30) kreist, der die Lüftungsklappe öffnet oder schließt, mit der er verbunden ist, in Abhängigkeit der Position des entsprechenden Steuerungselementes (2, 4).

3. Vorrichtung gemäß einem der Ansprüche 1 oder 2, **dadurch gekennzeichnet, dass** die Steuerwalzen (2, 4) mehrere Umfangsflächen aufweisen, die zueinander im Winkel angeordnet sind.

4. Vorrichtung gemäß Anspruch 3, **dadurch gekennzeichnet, dass** Nockenwege in jeder der Umfangsflächen gefertigt wurden, die zueinander im Winkel zu den Steuerwalzen (2, 4) angeordnet sind.

5. Vorrichtung gemäß einem der vorherigen Ansprüche, **dadurch gekennzeichnet, dass** ein einziger Servomotor (8) zum Antrieb der gesamten Mechanik vorgesehen ist.

6. Anordnung von Lüftungsklappen der Lüftungs-/Klimaanlage und/oder der Heizungsanlage eines Kraftfahrzeugs, die von einer Vorrichtung gesteuert wird, gemäß einem der Ansprüche 1 bis 5, **dadurch gekennzeichnet, dass** die Anordnung der Lüftungsklappen gleichzeitig Lüftungsklappenpaare aufweist, die zueinander symmetrisch sind und Lüftungsklappenpaare, die nicht zueinander symmetrisch sind.

7. Anordnung von Lüftungsklappen gemäß Anspruch 6, **dadurch gekennzeichnet, dass** mindestens zwei symmetrische Klappen des Raumes der Füße (18, 20) vorgesehen sind, deren Öffnungsposition jedes Mal durch den Rotationswinkel der Steuerwalzen (2, 4) bestimmt wird, wobei der Rotationswinkel der Steuerwalzen (2, 4) an die Klappen des Raumes der Füße (18, 20) übertragen wird, durch den entsprechenden Klappenhebel (14, 16), der in den Nockenwegen (10, 12) geführt wird, die mit den Klappen des Raumes der Füße (18, 20) verbunden sind.

8. Anordnung von Lüftungsklappen gemäß Anspruch 6, **dadurch gekennzeichnet, dass** mindestens zwei symmetrische Klappen des persönlichen Diffusors (24, 26) vorgesehen sind, deren Öffnungsposition durch den Rotationswinkel einer der Steuerwalzen (2) bestimmt wird, wobei der Rotationswinkel der Steuerwalzen (2) an die Klappen des persönlichen Diffusors (24, 26) übertragen wird, durch einen entsprechenden Klappenhebel (30), der in den Nockenwegen (32) geführt wird, die auf der Vorderseite der Steuerwalze (2) vorgesehen sind und die mit den Klappen des persönlichen Diffusors (24, 26) verbunden sind, über eine Achse (22), die beiden gemein ist.

9. Anordnung von Lüftungsklappen gemäß Anspruch 6, **dadurch gekennzeichnet, dass** mindestens zwei asymmetrische Lüftungsklappen (26, 34) vorgesehen sind, die über eine Pleuelstange und einen Kniehebel gekoppelt sind, die an den gegenüberliegenden Seiten der Lüftungsklappen vorgesehen sind.

10. Anordnung von Lüftungsklappen gemäß Anspruch 9, **dadurch gekennzeichnet, dass** eine der asymmetrischen Lüftungsklappen eine Klappe des persönlichen Diffusors (26) ist, der auf der gleichen Achse (22) angeordnet ist, wie die anderen Klappen des persönlichen Diffusors (24, 28) und dass die andere Lüftungsklappe (34) zur Lüftung einer anderen Zone des Kraftfahrzeugs dient und auf einer Achse (38), parallel zur ersten Achse (22) montiert ist.

11. Anordnung von Lüftungsklappen gemäß einem der Ansprüche 6 bis 10, **dadurch gekennzeichnet, dass** die Achsen (22, 38) der Klappen des persönlichen Diffusors 824, 26, 28) in einer oder mehreren Ebenen angeordnet sind, parallel zu der Ebene, in der die Achsen der Klappen des Raumes der Füße (18, 20) angeordnet sind.
